# EUROPEAN PATENT APPLICATION

(11) **EP 0 609 714 A1**
(43) Date of publication of application: **10.08.1994**
(21) Application number: 94100807.0
(22) Date of filing: 20.01.1994
(51) Int. Cl.: G06F 15/74

(54) **Polling type data collection system**

(30) Priority: 21.01.1993 JP 8371/93
(71) Applicant: NEC CORPORATION, Tokyo (JP)
(72) Inventor: Watanabe, Gaku, c/o NEC Corporation, Tokyo (JP)
(74) Representative: VOSSIUS & PARTNER

(57) **Abstract**

A polling type data collection system wherein data of monitored stations can be collected efficiently in a comparatively short time by simple operation by a monitor station. Identifiers of monitored stations (3) with which data communication is available and not available are stored into first and second storage means (4, 5) as first and second groups, respectively. The order in which a data request should be delivered to all and one of the monitored stations of the first and second groups, respectively, from data requesting means (8) is determined by data request order determination means (7). Regular reception of data from a monitored station (3) by the monitor station (2) is discriminated by reception discrimination means (9), and the identifiers of the first and second storage tables are reloaded in accordance with the discrimination by reloading means (6).

## Description

This invention relates to a polling type data collection system wherein a monitor station connected to a plurality of monitored stations by way of a bus network polls the monitored stations to collect data from the monitored stations by way of the bus network.

In conventional polling type data collection systems, a monitor station polls all monitored stations to be monitored equally irrespective of the states of the monitored stations. Consequently, the conventional polling type data collection systems have the following problem.

The time required for the system to collect data from a preset maximum number of monitored stations is defined as a sum of data collection time required for a normal monitored station or stations with which data communication is available and data collection time required for an abnormal or erroneously destined monitored station or stations with which data communication is not available. When a normal response to polling from the monitor station is not received from a monitored station, the monitor station usually sends out a polling signal repetitively by a plurality of times. Accordingly, as the number of monitored stations with which data communication is not available increases, the time required for collection of data increases very much.

Various systems have been proposed to solve the problem.

For example, Japanese Patent Laid-Open Application No. Showa 64-34036 discloses a monitor control system which achieves reduction of time required for a monitor station to collect data. According to the monitor control system, the monitor station detects whether or not data communication with a monitored station is available, and if data communication with the monitored station is not available, the monitor station sends out special polling information different from an ordinary polling signal so that a response signal representative of whether or not a polling signal can be received may be sent back from the monitor station. Then, the monitor station performs a polling operation for data collection in accordance with the contents of the response.

The monitor control system, however, is still disadvantageous in that, since a response signal representative of whether or not a polling signal can be received must be sent back for each polling period from all of monitored stations with which data communication is not available, as the number of monitored stations with which data communication is not available increases, the time required for data collection increases.

Meanwhile, a polling selecting system is disclosed in Japanese Patent Laid-Open Application No. Heisei 3-108838 wherein polling is performed collectively for all of child stations (monitored stations) from which a request to send is received in order to achieve enhancement of the efficiency in data collection. In the system, a parent station (monitor station) sends out a general polling frame to effect general polling to all of child stations connected in a loop. At the point of time, each child station which has a request to send inserts an address of a node of itself into a time slot position of the child station in the general polling frame. On the other hand, any child station which does not have a request to send at the point of time merely relays the general polling frame. When the general polling frame is transmitted through all of the child stations and returns to the parent station, the parent station collects node addresses of child stations which have a request to send, and now sends out a polling signal including information of order numbers of the requests to send to all of the applicable child stations. When the applicable child stations receive the polling signal, they store the information of the order numbers of the requests to send included in the polling signal, and then, when a carrier detection signal in the network is turned off, the child stations successively transmit their data to the parent station in accordance with the order provided by the order numbers of the requests to send.

The polling selecting system, however, is disadvantageous in that, since a general polling frame is sent to all of the monitored stations to collect addresses of those monitored stations which have a request to send and then polling for data collection is performed, the time for collection of addresses is required additionally.

Further, a channel accessing system is disclosed in Japanese Patent Laid-Open Application No. Heisei 2-65337 wherein polling is not performed for any slave station (monitored station) which does not have a request to send in order to achieve reduction of the communication time. According to the channel accessing system, a master station (monitor station) includes a reloadable polling table and slave station number allocation means while each slave station (monitored station) includes slave station number requesting means. If a request to send occurs with a slave station, the slave station number requesting means of the slave station requests allocation of a slave station number to the master station. The slave station number allocation means of the master station thus allocates a slave station number in response to the request and writes the slave station number into the polling table. Then, the master station performs polling only to slave stations corresponding to slave station numbers written in the polling table in this manner.

The channel accessing system, however, is disadvantageous in that such processing that a slave station (monitored station) requests allocation of a slave station number to the master station and the master station allocates a slave station number in response to the request is required, which complicates processing of the system.

It is an object of the present invention to provide a polling type data collection system wherein data of a plurality of monitored stations can be collected efficiently and in a comparatively short time by simple operation by a monitor station.

In order to attain the object described above, according to the present invention, there is provided a polling type data collection system wherein a monitor station connected to a plurality of monitored stations by way of a bus network polls the monitored stations to collect data from the monitored stations by way of the bus network, comprising a first reloadable storage table for storing identifiers of those of the monitored stations with which data communication is available as a first group, a second reloadable storage table for storing identifiers of those of the monitored stations with which data communication is not available as a second group, data requesting means for referring to the identifiers stored in the first and second storage tables to send out a request for data to all of the monitored stations belonging to the first group and a successively selected one of the monitored stations of the second group, reception discrimination means for discriminating whether or not data have been received regularly from the monitored stations to which the request for data has been send out, and reloading means for reloading the identifiers in the first and second tables in accordance with a result of discrimination of the reception discrimination means, the first and second tables, the data requesting means, the reception discrimination means and the reloading means being all provided in the monitor station.

Preferably, the polling type data collection system further comprises data request order determination means provided in the monitor station for determining order numbers of the monitored stations to which a request for data is to be sent out from the data requesting means.

In the polling type data collection system, those of the plurality of monitored stations with which data communication can be performed regularly and those of the plurality of monitored stations with which data communication cannot be performed due to such a reason that they are not connected to the bus network are grouped into a first group and a second group, respectively. The monitor station successively requests, in a first polling sequence, data to all of the monitored stations belonging to the first group to collect data and then requests data to one of the monitored stations belonging to the second group which has a first order number. If data can be received regularly from the monitor station of the second group, then the monitor station is shifted from the second group to the first group and data are collected from the monitor station. However, if data cannot be received regularly from the monitor station of the second group, the monitor station is left belonging to the second group. Then, in a next poling sequence, after a request for data is delivered to all of the monitor stations of the first group again, a request of data is delivered to another one of the monitored stations belonging to the second group which has a second order number. In short, a request for data is delivered to only one of the monitored stations of the second group, with which data communication is not available, for each one polling sequence to determine whether or not data communication is available with the one monitored station, and the one monitored station to which a request for data is to be delivered is successively changed for each polling sequence. On the other hand, when data cannot be received regularly from any of the monitored stations of the first group to which a request for data has been delivered, the monitor station is shifted from the first group to the second group, and then a request for data is delivered to one of the monitored stations in the first group which has a next order number.

Accordingly, the time required for one polling sequence is given as a sum of time required for requests for data to all of the monitored stations of the first group, with which data communication is available, as well as time required for collection of data from the monitored stations and time required for a request for data to one of the monitored stations in the second group, with which data communication is not available. Further, while a request for data is delivered to only one of the monitored stations of the second group for each one polling sequence, since the monitored station to which a request for data is delivered is successively changed, if any of the monitored stations of the second group returns into a condition wherein data can be communicated regularly, when the turn of polling comes to the monitored station, data can be collected from the monitored station.

Accordingly, with the polling type data collection system, since those of the plurality of monitored stations with which data communication can be performed regularly and those of the monitored stations with which data communication cannot be performed regularly due to such a reason that they are not connected to the bus network are grouped into the first and second groups, respectively, and for each polling sequence, a request for data is delivered successively to all of the monitored stations belonging to the first group to collect data and then a request for data is delivered to one of the monitored stations belonging to the second group whereas the monitored station of the second group to which a request for data is to be delivered is changed successively, the time required for collection of data can be reduced.

Since a request for data is delivered to only one of the monitored stations of the second group for each one polling sequence and the one monitored station to which a request for data is to be delivered is changed successively, if any of the monitored stations of the second group returns into a condition wherein data communication can be performed regularly, when the turn of polling comes to the monitored station, data can be collected from the monitored station.

The polling type data collection system is further advantageous in that the processing is simple as a whole and data of the plurality of monitored stations can be collected efficiently by the monitor station.

The above and other objects, features and advantages of the present invention will become apparent from the following description and the appended claims, taken in conjunction with the accompanying drawings in which like parts or elements are denoted by like reference characters.
FIG. 1 is a block diagram showing general construction of a monitor station in a polling type data collection system of the present invention;
FIG. 2 is a block diagram of a communication system to which the data collection system of the present invention is applied;
FIG. 3 is a diagrammatic representation illustrating a manner of storage of identifiers in a storage table shown in FIG. 1;
FIG. 4 is a diagrammatic representation illustrating a manner of deletion of an identifier in the storage table shown in FIG. 1;
FIG. 5 is a similar view but illustrating a manner of addition of an identifier in the storage table shown in FIG. 1;
FIG. 6 is a flow chart illustrating data collection operation by the monitor station shown in FIG. 2;
FIG. 7 is a flow chart showing a subroutine of first group data collection processing illustrated in FIG. 6; and
FIG. 8 is a time chart illustrating the processing illustrated in FIGS. 6 and 7.

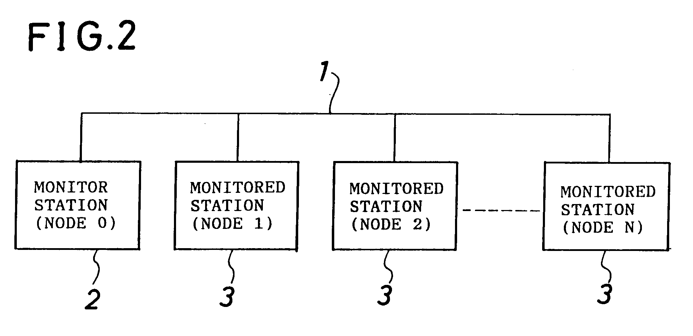

Referring first to FIG. 2, there is shown a communication system to which a data collection system according to the present invention is applied. The communication system shown includes a single monitor station (node 0) 2 and N monitored stations (node 1 to node N) 3 connected on a bus network 1. The monitor station 2 and the monitored stations 3 have different addresses or identifiers allocated thereto.

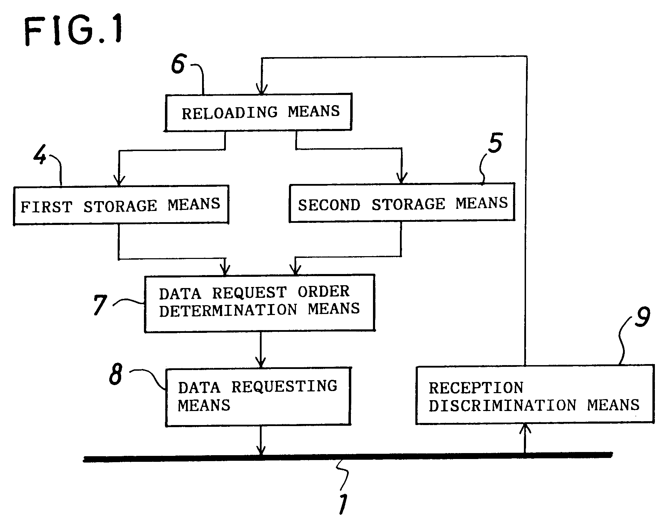

Referring now to FIG. 1, the monitor station 2 includes first and second storage tables 4 and 5, reloading means 6, data request order determination means 7, data requesting means 8 and reception discrimination means 9.

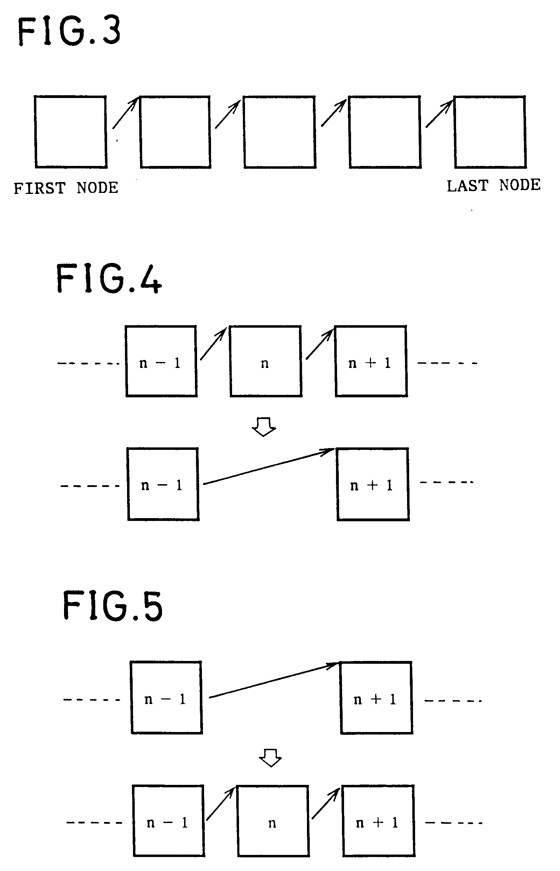

The first storage table 4 stores the identifiers of those of the monitored stations 3 with which data communication is available as a first group A, and the second storage table 5 stores the identifiers of those of the monitored stations 3 with which data communication is not available as a second group B. Each of the storage tables 4 and 5 stores relevant identifiers in order defined by order numbers of the nodes as seen in FIG. 3.

The data request order determination means 7 determines order numbers of a data request order to all of the monitored stations 3 of the first group A in accordance with the identifiers stored in the first storage table 4, and determines, in accordance with the identifiers stored in the second storage table 5, order numbers of a data request order in which the monitored stations 3 of the second group are to be successively selected one by one so that a request for data may be delivered. In this instance, the request for data to one of the monitored stations 3 selected from within the second group 2 is determined to be made subsequently to the request for data to a monitored station of the last in the order in the first group.

The data requesting means 8 sends out a request for data to relevant monitored stations 3 in order of the data request numbers determined by the data request order determination means 7.

The reception discrimination means 9 discriminates whether or not data from a monitored station 3, to which a request for data has been send out, are received regularly. The reloading means 6 reloads identifiers of the first and second storage tables 4 and 5 in accordance with a result of determination of the reception discrimination means 9.

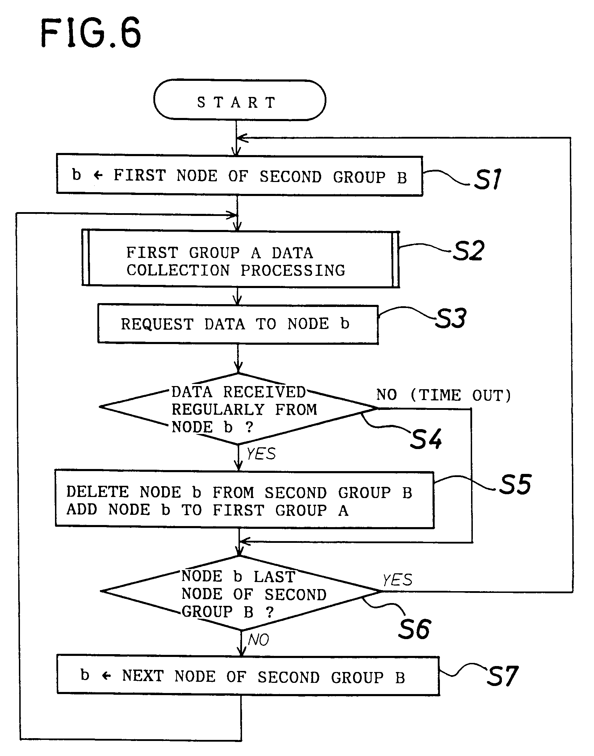

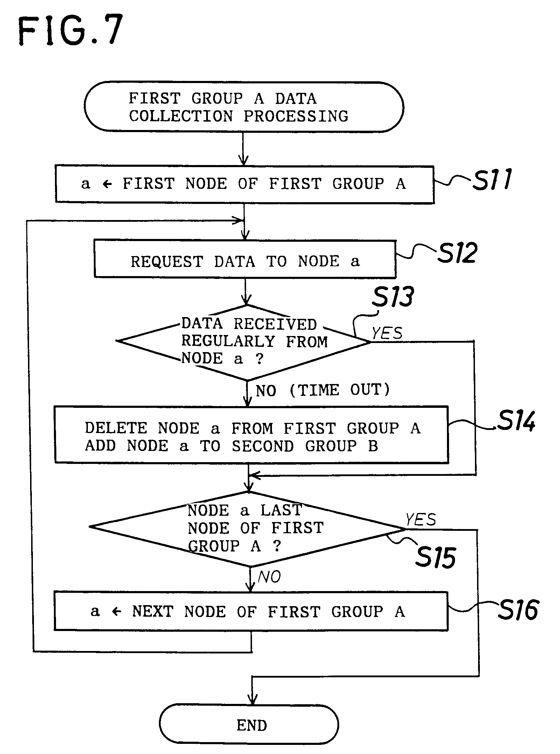

Data collection operation which is performed by the monitor station 2 is illustrated in FIGS. 6 and 7.

Referring first to FIG. 6, the monitor station 2 first determines, by means of the data request order determination means 7 thereof, a first node in the second group B as a processing node b (step S1) and then delivers a request for data to all of monitored stations 3 in the first group A to collect data from them (step S2).

The data collection processing at step S2 is illustrated in detail in FIG. 7. Referring to FIG. 7, the monitor station 2 first determines, by means of the data request order determination means 7, a node of a first order number in the group A as a processing node a (step S11) and then delivers a request for data to the processing node a by means of the data requesting means 8 (step S12). Then, it is discriminated by the reception discrimination means 9 whether or not data have been received regularly (step S13), and when data have been received regularly, the control sequence advances to step S15, at which it is determined by the data request order determination means 7 whether or not the processing node a is the last node in the first group A. If the processing node a is not the last node, the control sequence advances to step S16, at which a node of a next order number in the group A is determined as the processing node a by the node request order determination means 7, whereafter the control sequence returns to step S12 to repeat the same sequence of operations.

On the other hand, when data have not been received regularly at step S13 and then a predetermined period of time passes, the control sequence advances to step S14, at which the processing node a is deleted from the first group A and added to the second group. In particular, the reloading means 6 performs reloading of the relevant identifier between the first storage table 4 and the second storage table 5. FIGS. 4 and 5 illustrate the reloading operation. In particular, when the identifier of the processing node a is, for example, n, FIG. 4 illustrates that the identifier n is deleted so that the corresponding storage portion becomes blank while FIG. 5 illustrates that the identifier n is stored into a corresponding storage portion which has been blank.

Referring back to FIG. 6, after data collection from a monitored station 3 of the last order number in the first group A is completed, processing for the monitored stations 3 in the second group B is performed. In particular, the control sequence advances from step S2 of FIG. 6 to step S3, at which a request for data is delivered to the processing node b by the data requesting means 8. Then, it is determined by the reception discrimination means 9 whether or not data have been received regularly from the processing node b (step S4), and then when data have not been received regularly and then a predetermined time passes, the control sequence advances to step S6, at which it is determined by the data request order determination means 7 whether or not the processing node b is the last node in the second group B. If the processing node b is not the last node, then the control sequence advances to step S7, at which a node of a next order number in the second group B is determined as the processing node b by the data request order determination means 7, whereafter the control sequence returns to step S2 to repeat the processing illustrated in FIG. 7.

On the other hand, when data have been received regularly at step S4, the control sequence advances to step S5, at which reloading of the relevant identifier is performed between the second table 5 and the first table 4 by the reloading means 6 to delete the processing node b from the group B and add it to the first group A.

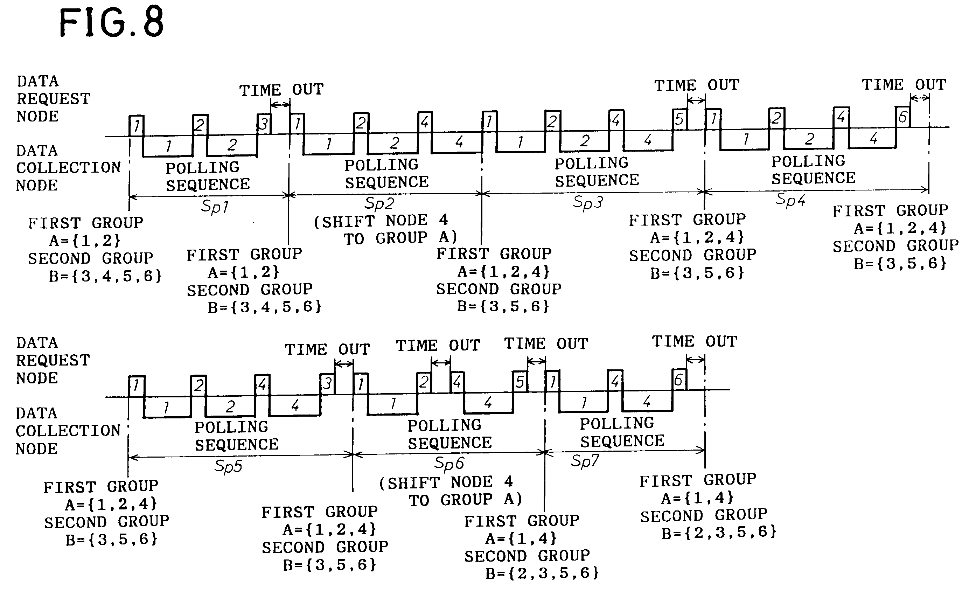

FIG. 8 illustrates, in the form of a time chart, an example of the processing illustrated in FIGS. 6 and 7. In the example illustrated in FIG. 8, six monitored stations 3 are monitored by a single monitor station 2, and the values 1 to 6 are allocated as identifiers (addresses) to the six nodes.

Referring to FIG. 8, it can be seen that, if it is assumed that two nodes 1 and 2 belong to the first group A while the remaining four nodes 3, 4, 5 and 6 belong to the second group B, in a first polling sequence Sp1, request for data to and collection of data from the node 1 of the first group A and request for data to and collection of data from the node 2 are successively performed regularly, and then a request for data is delivered to a first node 3 in the second group B, but data are not received regularly from the node 3 and the predetermined time elapses.

In a second polling sequence Sp2, when request for data to and collection of data from the node 1 of the first group A and request for data to and collection of data from the node 2 are successively performed regularly and then a request for data is delivered to a next node 4 of the second group B, data are collected regularly from the node 4, and then, the node 4 is shifted from the second group B to the first group A.

In a third polling sequence Sp3, when request for data to and collection of data from the node 1 of the first group A and request for data to and collection of data from the node 2 and then request for data to and collection of data from the node 4, which has been shifted to the first group A as described above, are successively performed regularly and then a request for data is delivered to a next node 5 of the second group B, data cannot be collected regularly from the node 5 and the predetermined time has passed.

In a fourth polling sequence Sp4, when request for data to and collection of data from the node 1 of the first group A and request for data to and collection of data from the node 2 and then request for data to and collection of data from the node 4 are successively performed regularly and then a request for data is delivered to the last node 5 of the second group B, data are not collected regularly from the node 6 and the predetermined time elapses.

In a fifth polling sequence Sp5, when request for data to and collection of data from the node 1 of the first group A and request for data to and collection of data from the node 2 and then request for data to and collection of data from the node 4 are successively performed regularly and then a request for data is delivered to the first node 3 of the second group B again, data are not collected regularly from the node 3 and the predetermined time elapses.

In a sixth polling sequence Sp6, although request for data to and collection of data from the node 1 of the first group A are performed regularly, data are not collected regularly from the node 2 and the predetermined time elapses. Consequently, the node 2 is shifted from the first group A to the second group B, and then request for data to and collection of data from the node 4 are performed regularly, whereafter a request for data is delivered to the node 5 of the second group B. As a result, data are not received regularly from the node 5 and the predetermined time elapses.

In a seventh polling sequence Sp7, when request for data to and collection of data from the node 1 of the first group A and request for data to and collection of data from the node 4 are successively performed regularly and then a request for data is delivered to the last node 6 of the second group B, data are not received regularly from the node 6 and the predetermined time elapses.

Having now fully described the invention, it will be apparent to one of ordinary skill in the art that many changes and modifications can be made thereto without departing from the spirit and scope of the invention as set forth herein.

## Claims

1. A polling type data collection system wherein a monitor station connected to a plurality of monitored stations by way of a bus network polls said monitored stations to collect data from said monitored stations by way of said bus network, characterized in that it comprises:
a first reloadable storage table (4) for storing identifiers of those of said monitored stations (3) with which data communication is available as a first group;
a second reloadable storage table (5) for storing identifiers of those of said monitored stations (3) with which data communication is not available as a second group;
data requesting means (8) for referring to the identifiers stored in said first and second storage tables (4, 5) to send out a request for data to all of the monitored stations (3) belonging to said first group and a successively selected one of the monitored stations (3) of said second group;
reception discrimination means (9) for discriminating whether or not data have been received regularly from the monitored stations (3) to which the request for data has been send out; and
reloading means (6) for reloading the identifiers in said first and second tables (4, 5) in accordance with a result of discrimination of said reception discrimination means (9);
said first and second tables (4, 5), said data requesting means (8), said reception discrimination means (9) and said reloading means (6) being all provided in said monitor station (2).

2. A polling type data collection system as set forth in claim 1, characterized in that it further comprises data request order determination means (7) provided in said monitor station (2) for determining order numbers of the monitored stations (3) to which a request for data is to be sent out from said data requesting means (8).
